# EUROPÄISCHE PATENTSCHRIFT

(11) **EP 1 522 686 B1**
(45) Veröffentlichungstag und Bekanntmachung des Hinweises auf die Patenterteilung: **18.04.2007**
(21) Anmeldenummer: 04023601.0
(22) Anmeldetag: 04.10.2004
(51) Int. Cl.: F01N 3/022, F01N 3/035

(54) **Abgasreinigungsanordnung**
Exhaust purification device
Dispositif de purification des gaz d'échappement

(30) Priorität: 06.10.2003 DE 10346286
(43) Veröffentlichungstag der Anmeldung: 13.04.2005
(73) Patentinhaber: J. Eberspächer GmbH & Co. KG, 73730 Esslingen (DE)
(72) Erfinder: Gaiser, Gerd Dr, 72768 Reutlingen (DE)
(74) Vertreter: Schorr, Frank Jürgen

(56) Entgegenhaltungen:
- EP-A- 0 470 365
- WO-A-02/29218
- DE-A1- 19 750 980
- GB-A- 2 064 360
- US-A- 3 458 977
- US-A- 4 363 753

## Beschreibung

Die vorliegende Erfindung betrifft eine Abgasreinigungsanordnung sowie ein Verfahren zum Herstellen einer Abgasreinigungsanordnung zur Reinigung eines Abgases einer Verbrennungskraftmaschine.

Es ist allgemein bekannt, daß mit fossilen Brennstoffen betriebene Brennkraftmaschinen Schadstoffe emittieren. Zu diesen Schadstoffen zählen insbesondere sogenannte Feststoffpartikel, wie zum Beispiel Rußpartikel, welche für den menschlichen Organismus schädlich sind. Wie auch bekannt ist, werden diese Rußpartikel insbesondere von mit Dieselkraftstoff betriebenen Brennkraftmaschinen ausgestoßen, wie sie überwiegend in Nutzfahrzeugen und zunehmend auch Pkw zu finden sind.

Zur Reduzierung dieser Feststoffpartikel wird nun eine Abgasreinigungsanordnung, das heißt ein sogenannter Partikelfilter verwendet, welcher im Abgasstrang einer Brennkraftmaschine angeordnet ist.

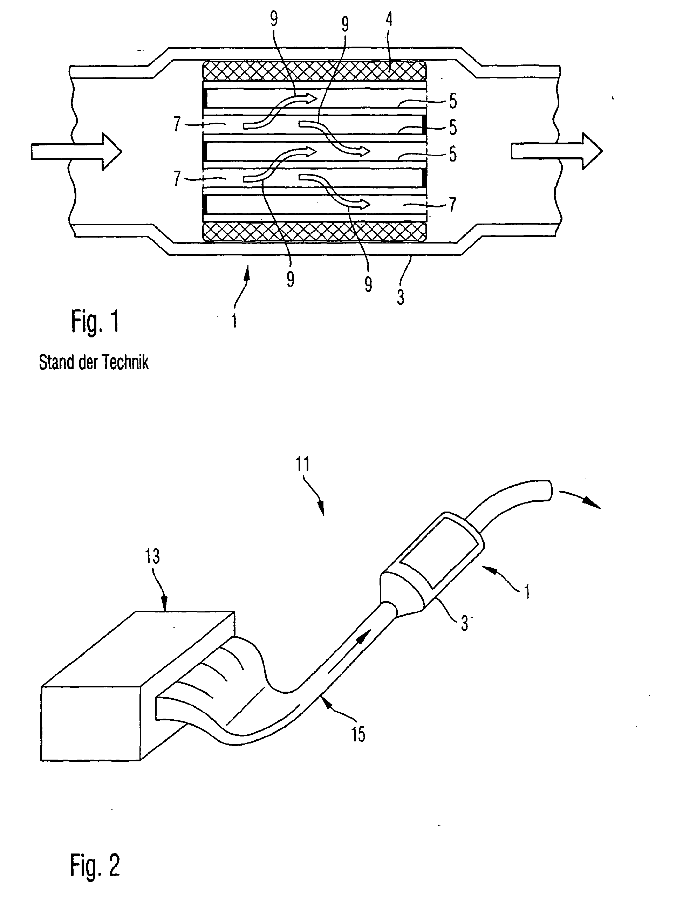

Ein herkömmlicher Partikelfilter ist in Figur 1 dargestellt. Der Partikelfilter 1 ist in einem metallenen Gehäuse 3 angeordnet, gelagert in einer Fasermatte 4, und umfaßt Materialschichten bzw. filternde Wände 5 aus einem für das Abgas permeablen porösen Filtermaterial. Wie in Figur 1 durch Pfeile dargestellt ist, strömt das Abgas von links (Eintrittsseite) nach rechts (Austrittsseite) durch den Partikelfilter 1.

Die filternden Wände 5 des in Figur 1 dargestellten Partikelfilters 1 bestehen aus porösen Sintermetallplatten oder aus keramischen Kanälen. Bei der gestapelten Anordnung der Platten entstehen Abgasströmungsgänge 7 zwischen diesen Platten. Diese Abgasströmungsgänge 7 sind wechselseitig auf der Eintrittsseite geschlossen und auf der Austrittsseite offen bzw. auf der Eintrittsseite offen und auf der Austrittsseite geschlossen, wodurch das in die Abgasströmungsgänge 7 auf der Eintrittsseite einströmende Abgas zu Durchtritten durch die porösen Filterwände 5 gezwungen wird. Die Durchtritte sind in Figur 1 mit Pfeilen 9 dargestellt. Die Filterwirkung des Partikelfilters 1 ergibt sich durch die Durchtritte des Abgases durch die Filterwände 5, wobei im Abgas befindliche Partikel in den Filterwänden steckenbleiben.

DE 197 50 980 A1 offenbart einen Abgas-Katalysator mit einem Trägerkörper, welcher aus einer gewellten, im Prinzip ohne endlich langen Faserstruktur, die meanderförmig zu mehreren aneinander liegenden Lagen zusammengefaltet ist, besteht, wobei die Umkehrpunkte der Faserstruktur die Knickpunkte der ursprünglich geraden Faserstruktur darstellen. Zwischen den Lagen verlaufen in Längsrichtung des Katalysators Kanäle, die vom Abgas durchströmt werden. Aufgrund der Porosität der gesinterten Faserstruktur bilden sich zum Teil Strömungen durch die Lagen der Faserstruktur aus.

Ein Nachteil des herkömmlichen Partikelfilters ist, daß es zu inhomogenen Ablagerungen, insbesondere am Ende von austrittsseitig geschlossenen Abgasströmungsgängen, kommen kann, und daß sich ein uneinheitliches Temperaturprofil im Partikelfilter einstellen kann, wodurch eine Regeneration des Partikelfilters ungleichmäßig abläuft.

Es ist eine Aufgabe der vorliegenden Erfindung, die herkömmliche Abgasreinigungsanordnung dahingehend weiterzuentwickeln, daß Inhomogenitäten insbesondere hinsichtlich Ablagerungen Reaktionskinetik und Temperaturprofil, reduziert werden.

Diese Aufgabe wird gelöst durch eine Abgasreinigungsanordnung mit den Merkmalen des beiliegenden Anspruchs 1.

Eine erfindungsgemäße Abgasreinigungsanordnung zur Reinigung eines Abgases einer Verbrennungskraftmaschine umfaßt einen Stapel aus mehreren in einer Stapelrichtung übereinander angeordneten Materialschichten aus einem für das Abgas permeablen porösen Werkstoff und mit einer Eintrittsseite und einer Austrittsseite, wobei zwischen jeweils zwei im Stapel benachbarten Materialschichten wenigstens ein Abgasströmungsgang in der Stapelrichtung begrenzt ist, und wobei Abgasströmungsgänge, die an der Eintrittsseite offen und an der Austrittsseite geschlossen sind, in Stapelrichtung abwechselnd mit Abgasströmungsgängen, die an der Eintrittsseite geschlossen und an der Austrittsseite offen sind, angeordnet sind, und wobei die Abgasströmungsgänge durch Oberflächen der Materialschichten begrenzt sind, welche, gesehen in einer,Strömungsrichtung des Abgases von der Eintrittsseite zu der Austrittsseite, nacheinander eine Mehrzahl von konkaven und konvexen Bereichen aufweisen.

Eine Partikelabscheidung erfolgt durch erzwungenen Durchtritt durch die für das Abgas permeablen porösen Materialschichten von einem eintrittsseitig offenen Abgasströmungsgang in einen austrittsseitig offenen Abgasströmungsgang.

Ein Vorteil der vorliegenden Erfindung besteht darin, daß durch die konkaven und konvexen Oberflächenbereiche der Materialschichten eine turbulente Durchströmung des Partikelfilters erzielt wird. Damit wird eine gleichförmige Belegung der filternden Materialschichten erreicht und ein lokales Verblocken wird vermieden. Die vorteilhafte turbulente. Durchströmung wird dadurch erzielt, daß das Abgas aufgrund der konkaven und konvexen Oberflächenbereiche zu einem zickzackförmigen Strömungsweg gezwungen wird.

Die Materialschichten können eine Beschichtung mit katalytischer Wirkung tragen, so daß, da die Materialschichten gleichförmig belegt werden, auch eine gleichmäßige Regeneration der Materialschichten stattfindet.

Gemäß der Erfindung sind durch die konkaven und konvexen Oberflächenbereiche zusammenhängende Wellenberge und Wellentäler gebildet. Dadurch ergibt sich eine relativ erhöhte Stabilität der Materialschichten, was sich hinsichtlich mechanischer Belastungen, wie z.B. Abgaspulsationen, des gesamten Partikelfilters positiv auswirkt.

Es wird weiterhin vorgesehen, daß die Wellenberge und Wellentäler sich in einer Materialschichtebene im wesentlichen geradlinig erstrecken. Dadurch sind die Materialschichten besonders stabil.

Hierbei sind die Wellenberge und die Wellentäler der jeweils zwei im Stapel benachbarten Materialschichten unter einem Winkel von mehr als 10° zueinander orientiert. Dadurch wird eine besonders effektive "Verwirbelung" des Abgases zwischen den Materialschichten erzielt.

Bevorzugterweise liegen unmittelbar benachbarte Materialschichten an einer Vielzahl von Berührungspunkten aufeinander auf. Dadurch ergibt sich eine flächige Abstützung der Materialschichten gegeneinander, so daß der Partikelfilter insgesamt relativ stabil gegenüber mechanischen Belastungen ist, wie z.B. von der Verbrennungskraftmaschine herrührenden Abgaspulsationen.

In weiterer Ausgestaltung der Erfindung liegen die den an seiner Austrittsseite bzw. an seiner Eintrittsseite geschlossenen Abgasströmungsgang begrenzenden Materialschichten an der Austrittsseite bzw. an der Eintrittsseite entlang einer Linie quer zur Strömungsrichtung aneinander an. Dadurch wird das Verschliessen von Abgasströmungsgängen auf der Eintritts- bzw. Austrittsseite erleichtert.

In weiterer Ausgestaltung der Erfindung sind die den an seiner Austrittsseite bzw. an seiner Eintrittsseite geschlossenen Abgasströmungsgang begrenzenden Materialschichten entlang der Linie durch Kleben oder/und durch Verschweißen oder/und durch Falzen miteinander verbunden. Diese Verbindungsarten sind eine besonders einfache und effiziente Weise, die Abgasströmungsgänge an der Eintritts- bzw. Austrittsseite zu verschließen.

Es wird bevorzugt, daß die den an seiner Austrittsseite bzw. an seiner Eintrittsseite geschlossenen Abgasströmungsgang begrenzenden Materialschichten an der Austrittsseite bzw. an der Eintrittsseite durch einen quer zur Strömungsrichtung sich erstreckenden durchgehenden Steg miteinander verbunden sind.

Es wird weiterhin bevorzugt, daß die den an seiner Austrittsseite bzw. an seiner Eintrittsseite geschlossenen Abgasströmungsgang begrenzenden Materialschichten an der Austrittsseite bzw. an der Eintrittsseite integral miteinander verbunden sind. Dies ist eine besonders effiziente Weise, die Abgasströmungsgänge an Ein- bzw. Austrittsseiten zu schliessen.

In weiterer Ausgestaltung der Erfindung ist zwischen jeweils zwei einander im Stapel benachbarten Materialschichten ein Abstandshalter vorgesehen. Auf diese Weise wird ein konstanter Abstand zwischen den Materialschichten erzielt, so daß der Partikelfilter besonders gleichmäßig durchströmt wird.

Vorzugsweise ist der Abstandshalter ein gewelltes Flachmaterial.

Zweckmäßigerweise weist ein mittlerer Abstand zwischen jeweils zwei im Stapel benachbarten Materialschichten einen Wert in einem Bereich von 0,5 mm bis 8,0 mm, insbesondere 1,0 mm bis 4,0 mm, und noch bevorzugter 1,5 bis 3,0 mm, auf. Dabei ist der mittlere Abstand zwischen benachbarten Materialschichten der Abstand zwischen (gedachten) mittleren Ebenen der Materialschichten.

Bevorzugt ist eine Auslenkung der konkaven bzw. konvexen Oberflächenbereiche jeweils aus mittleren Materialschichtebenen größer als 1 mm.

Weiter bevorzugt ist eine Auslenkung der konkaven bzw. konvexen Oberflächenbereiche aus deren Materialschichtebenen kleiner als 7 mm, insbesondere kleiner als 5 mm und weiter bevorzugt kleiner als 3 mm.

Noch weiter bevorzugt ist ein lateraler Abstand in Materialschichtrichtung zwischen einander benachbarten konvexen Bereichen größer als 2 mm, insbesondere größer als 3 mm.

Zweckmäßigerweise ist ein Abstand in Materialschichtrichtung zwischen einander benachbarten konvexen Bereichen kleiner als 7 mm, insbesondere kleiner als 5 mm.

Bevorzugterweise ist eine Dicke der Materialschichten größer als 0,1_mm, insbesondere größer als 0,3 mm.

Weiterhin bevorzugt ist eine Dicke der Materialschichten kleiner als 2,0 mm, insbesondere kleiner als 1,2 mm.

In weiterer Ausgestaltung der Erfindung ist der für das Abgas permeable poröse Werkstoff als ein Gewebe oder/und ein Vlies oder/und ein Geflecht aus einem Fasermaterial gefertigt.

In noch weiterer Ausgestaltung der Erfindung umfaßt das Fasermaterial Metallfasern oder/und Keramikfasern.

Zweckmäßigerweise ist der für das Abgas permeable poröse Werkstoff aus einem Pulvermaterial gefertigt.

In anderer Ausgestaltung der Erfindung ist der für das Abgas permeable poröse Werkstoff aus einem Schaum gefertigt.

In noch anderer Ausgestaltung der Erfindung ist der für das Abgas permeable poröse Werkstoff als Sinterkörper gefertigt.

In weiterer Ausgestaltung der Erfindung umfaßt der für das Abgas permeable poröse Werkstoff ein Katalysatormaterial, insbesondere aus wenigstens einem Edelmetall oder/und wenigstens einem Metalloxid oder/und wenigstens einem Mischoxid, oder/und der poröse Werkstoff umfaßt ein Sauerstoff-Speichermaterial, welches insbesondere Cer oder/und ein Cer-Oxid umfaßt. Dadurch kann die Abgasreinigungsanordnung auch gleichzeitig als Katalysator verwendet werden, um von der Verbrennungskraftmaschine im Betrieb abgegebene Schadstoffe HC, CO, und NOₓ unter Verwendung von geeigneten Katalysatormaterialien in die unschädlichen Stoffe H₂O, CO₂, und N₂ umzuwandeln. Dabei wird sich auf oder/und in den porösen Materialschichten ablagernder Ruß unter katalytischer Wirkung des Katalysatormaterials verbrannt. Die Verwendung der Abgasreinigungsanordnung ist in Verbindung mit der katalytischen Beschichtung besonders vorteilhaft, das heißt eine Regeneration der Abgasreinigungsanordnung ist wegen der gleichmäßigen Durchströmung der Abgasreinigungsanordnung aufgrund der konvexen und konkaven Oberflächenbereiche besonders effektiv. Größere Rußablagerungen entstehen aufgrund der besonderen Durchströmung nicht, das katalytische Material kann wirkungsvoll die Schadstoffe umwandeln.

In noch weiterer Ausgestaltung der Erfindung ist der Stapel an seiner Aussenseite in einem Bereich zwischen der Eintrittsseite und der Austrittsseite von wenigstens einer Matte aus dem Fasermaterial oder/und wenigstens einer Faservliesschicht begrenzt.

Bevorzugterweise umgibt die Fasermaterialmatte den Stapel in dem Bereich zwischen der Eintrittsseite und der Austrittsseite vollständig.

In weiterer Ausgestaltung der Erfindung ist wenigstens einer der Abgasströmungsgänge quer zur Stapelrichtung durch die Matte begrenzt. Durch diese Anordnung wird neben der seitlichen Abdichtung der Abgasströmungskanäle durch die Fasermaterialmatte die Abgasreinigungsanordnung auch gleichzeitig in einfacher Weise durch Verklemmen der Abgasreinigungsanordnung mit der Fasermaterialmatte in dem Gehäuse gehaltert, ohne daß eine fügende Verbindung erforderlich ist.

Es wird bevorzugt, daß die Fasermaterialmatte eine keramische Fasermaterialschicht oder/und eine metallische Faservliesschicht umfasst. Durch Umwickeln der Abgasreinigungsanordnung zunächst mit einer metallischen Faservliesschicht wird bei anschliessender Lagerung in einer Fasermaterialschicht eine gleichmäßigere Flächenpressung der Fasermaterialschicht erzielt. Es wird vermieden, daß die keramische Fasermaterialschicht durch einzelne vorstehende Materialschichten der Abgasreinigungsanordnung beschädigt wird.

Die vorliegende Offenbarung zeigt ferner eine Abgasreinigungsanordnung zur Reinigung eines Abgases einer Verbrennungskraftmaschine, wobei die Abgasreinigungsanordnung umfasst: einen Stapel aus mehreren in einer Stapelrichtung übereinander angeordneten Materialschichten aus einem für das Abgas permeablen porösen Werkstoff und mit einer Eintrittsseite und einer Austrittsseite, wobei zwischen jeweils zwei im Stapel benachbarten Materialschichten wenigstens ein Abgasströmungsgang in der Stapelrichtung begrenzt ist, und wobei Abgasströmungsgänge, die an der Eintrittsseite offen und an der Austrittsseite geschlossen sind, in Stapelrichtung abwechselnd mit Abgasströmungsgängen, die an der Eintrittsseite geschlossen und an der Austrittsseite offen sind, angeordnet sind, wobei ein Querschnitt wenigstens eines an der Eintrittsseite offenen ersten Abgasströmungsgangs, gesehen in Längsrichtung des ersten Abgasströmungsgangs, größer ist als ein Querschnitt wenigstens eines an der Austrittsseite offenen zweiten Abgasströmungsgangs, gesehen in Längsrichtung des zweiten Abgasströmungsgangs. Durch den größeren Querschnitt wird vermieden, daß die an ihrer Eintrittsseite offenen Abgasströmungsgänge verblocken, wenn sich Rußpartikel aus dem Abgas in diesen Abgasströmungsgängen ablagern.

Zweckmäßigerweise sind für sämtliche Abgasströmungsgänge in dem Stapel die Eintrittsquerschnitte der an der Eintrittsseite offenen Abgasströmungsgänge größer als die Austrittsquerschnitte der an der Austrittsseite offenen Abgasströmungsgänge.

Noch zweckmäßiger sind Querschnitte der an der Eintrittsseite offenen Abgasströmungsgänge und der an der Austrittsseite offenen Abgasströmungsgänge jeweils über die gesamte Länge der Abgasströmungsgänge konstant.

Die vorliegende Offenbarung zeigt ferner eine Abgasreinigungsanordnung zur Reinigung eines Abgases einer Verbrennungskraftmaschine, wobei die Abgasreinigungsanordnung umfasst: einen Stapel aus mehreren in einer Stapelrichtung übereinander angeordneten Materialschichten aus einem für das Abgas permeablen porösen Werkstoff und mit einer Eintrittsseite und einer Austrittsseite; wobei zwischen jeweils zwei im Stapel benachbarten Materialschichten wenigstens ein Abgasströmungsgang in der Stapelrichtung begrenzt ist; und wobei Abgasströmungsgänge, die an der Eintrittsseite offen und an der Austrittsseite geschlossen sind, in Stapelrichtung abwechselnd mit Abgasströmungsgängen, die an der Eintrittsseite geschlossen und an der Austrittsseite offen sind, angeordnet sind; wobei sich ein Querschnitt wenigstens eines der an der Eintrittsseite offenen Abgasströmungsgänge von der Eintrittsseite zu der Austrittsseite hin kontinuierlich verringert und sich ein Querschnitt wenigstens eines der an der Eintrittsseite geschlossenen Abgasströmungsgänge von der Eintrittsseite zu der Austrittsseite hin kontinuierlich vergrößert.

Dadurch wird erreicht, daß das Abgas in den an ihrer Eintrittsseite offenen Abgasströmungsgängen gleichmäßig an allen Stellen der die Abgasströmungsschicht bildenden filternden Materialschichten hindurchströmt und sich somit ein (Abgas-) Massenstrom in den an ihrer Eintrittsseite offenen Abgasströmungsgängen entlang der Strömungsrichtung verringert und sich der Massenstrom in den an ihrer Austrittsseite offenen Abgasströmungsgängen in Strömungsrichtung entsprechend vergrößert. Dadurch, daß sich der örtliche Massenstrom entsprechend den Querschnitten der Abgasströmungsgänge ändert, ergibt sich eine ausgeglichenere Geschwindigkeit entlang jedes Abgasströmungsgangs. Dadurch wiederum ergibt sich eine gleichmäßigere Druckverteilung und somit über die Länge der Abgasströmungsgänge eine gleichmäßigere Verteilung einer Druckdifferenz (aufgrund des Übertritts des Abgases von einem Abgasströmungsgang in einen benachbarten Abgasströmungsgang) zwischen an ihrer Eintrittsseite offenen Abgasströmungsgängen und an ihrer Austrittsseite offenen Abgasströmungsgängen. Daraus folgt eine gleichmäßigere Verteilung des örtlichen Quermassenstroms durch die filternden Materialschichten und damit eine gleichmäßigere Nutzung der filternden Materialschichtoberfläche und eine gleichmäßigere Rußschichtdicke in den an ihrer Eintrittsseite offenen Abgasströmungsgängen.

Die vorliegende Offenbarung zeigt ferner eine Abgasreinigungsanordnung zur Reinigung eines Abgases einer Verbrennungskraftmaschine, wobei die Abgasreinigungsanordnung umfasst: einen Stapel aus mehreren in einer Stapelrichtung übereinander angeordneten Materialschichten aus einem für das Abgas permeablen porösen Werkstoff und mit einer Eintrittsseite und einer Austrittsseite, wobei zwischen jeweils zwei im Stapel benachbarten Materialschichten wenigstens ein Abgasströmungsgang in der Stapelrichtung begrenzt ist, und wobei Abgasströmungsgänge, die an der Eintrittsseite offen und an der Austrittsseite geschlossen sind; in Stapelrichtung abwechselnd mit Abgasströmungsgängen, die an der Eintrittsseite geschlossen und an der Austrittsseite offen sind, angeordnet sind, wobei zwischen einem Gehäuse des Stapels und dem Stapel eine Matte aus dem für das Abgas permeablen Werkstoff angeordnet ist und wenigstens einer der Abgasströmungsgänge quer zur Stapelrichtung durch die Matte begrenzt ist. Dadurch wird in vorteilhafter Weise eine seitliche Abdichtung der Abgasströmungsgänge erzielt, ohne die Abgasströmungsgänge in aufwendiger Weise, wie z.B. Schweißen, miteinander zu verbinden.

Ein Verfahren zum Herstellen einer Abgasreinigungsanordnung zur Reinigung eines Abgases einer Verbrennungskraftmaschine umfaßt: Bereitstellen eines für das Abgas permeablen porösen Werkstoffs als ein Materialband; Falten des Materialbandes an quer zu einer Erstreckungsrichtung des Materialbandes sich erstreckenden Faltlinien, welche mit einem Abstand in Erstreckungsrichtung des Materialbandes voneinander angeordnet sind; Legen des gefalteten Materialbandes in Abschnitten derart übereinander, daß ein Stapel gebildet wird; Einbauen des Stapels in ein Gehäuse, welches eine Eintrittsöffnung für das Abgas und eine der Eintrittsöffnung gegenüberliegende Austrittsöffnung für gereinigtes Abgas aufweist, wobei der Stapel in dem Gehäuse derart orientiert wird, daß die Faltlinien an dem Stapel zu der Eintrittsöffnung und zu der Austrittsöffnung hinweisend angeordnet sind, und wobei der Stapel gegenüber dem Gehäuse derart abgedichtet wird, daß im wesentlichen jeder mögliche Weg des Abgases von der Eintrittsöffnung zu der Austrittsöffnung das Materialband wenigstens ein Mal durchsetzt. So wird in einfacher Weise ein Partikelfilterstapel mit wechselseitig geschlossenen bzw. offenen Abgasströmungsgängen gebildet, und zwar ohne daß einzelne Materialbandabschnitte geschnitten werden müssen, wodurch die Herstellung besonders vorteilhaft ist.

In einer weiteren bevorzugten Ausführungsform wird das Materialband beim Falten zwischen zwei Prägewalzen zum Einbringen von Deformationsbereichen entlang der Faltlinien hindurchgeführt. Die Deformationsbereiche erleichtern in besonderer Weise das Falten der Schicht.

Vorzugsweise werden die Deformationsbereiche durch Eindrücken des Materialbandes in eine an einer ersten der beiden Walzen vorgesehene wenigstens eine Längsausnehmung mittels eines an einer zweiten der beiden Walzen vorgesehenen entsprechenden wenigstens einen Längswulstes eingebracht.

Weiterhin wird bevorzugt, daß die wenigstens eine Längsausnehmung sich parallel zu einer Achse der ersten Walze erstreckt und der wenigstens eine Wulst sich parallel zu einer Achse der zweiten Walze erstreckt.

Zweckmäßigerweise wird ferner durch die Prägewalzen das Materialband zu einem gewellten Materialband geformt.

In bevorzugter Ausgestaltung sind zum Wellen des Materialbandes an einer Oberfläche der ersten und der zweiten Walze in Umfangsrichtung der Walze benachbarte Wulste und Ausnehmungen vorgesehen, welche sich spiralförmig um die Achsen der Walzen erstrecken.

Weiterhin wird bevorzugt, daß an der ersten und der zweiten Walze jeweils eine gerade Anzahl von Umfangsbereichen vorgesehen ist, welche jeweils in Umfangsrichtung einerseits durch einen Längswulst und andererseits durch eine Längsausnehmung begrenzt sind, und wobei Orientierungen der spiralförmigen Wulste und Ausnehmungen in einander in Umfangsrichtung benachbarten Umfangsbereichen einander entgegengesetzt sind.

Vorzugsweise werden beim Legen zum Stapel Abstandshalter zwischen einander benachbarten Abschnitten des Materialbandes angeordnet.

Dabei ist bevorzugt, daß der Abstandshalter ein gewelltes Flachmaterial ist, dessen Wellenberge und Wellentäler sich in der Erstreckungsrichtung des Materialbandes erstrecken.

Es wird weiterhin bevorzugt, daß zwischen dem Gehäuse und dem Stapel eine Matte aus einem Drahtgestrickmaterial oder/und Drahtvliesmaterial oder/und einem Keramikmaterial eingefügt wird. Wie oben schon erwähnt, wird durch diese Anordnung neben der seitlichen Abdichtung der Abgasströmungskanäle durch die Fasermaterialmatte die Abgasreinigungsanordnung auch gleichzeitig in einfacher Weise durch Verklemmen der Abgasreinigungsanordnung mit der Fasermaterialmatte in dem Gehäuse gehaltert, ohne daß eine fügende Verbindung erforderlich ist.

Nachfolgend werden Ausführungsformen der Erfindung anhand von Zeichnungen näher erläutert. Hierbei zeigt bzw. zeigen:
- Figur 1: einen herkömmlichen Partikelfilter;
- Figur 2: eine schematische Darstellung einer ersten Ausführungsform einer erfindungsgemäßen Abgasreinigungsanordnung im Abgasstrang eines Kraftfahrzeugs;
- Figur 3: eine perspektivische Detailansicht der Abgasreinigungsanordnung gemäß Figur 2;
- Figur 4: eine Querschnittsansicht einer Abgasreinigungsanordnung gemäß einer zweiten Ausführungsform der Erfindung;
- Figur 5: eine perspektivische Querschnittsansicht der in Figur 4 dargestellten Abgasreinigungsanordnung;
- Figur 6: eine perspektivische Ansicht der zweiten Ausführungsform der Abgasreinigungsanordnung;
- Figur 7: eine perspektivische Ansicht einer dritten Ausführungsform der Abgasreinigungsanordnung;
- Figur 8: eine perspektivische Ansicht einer vierten Ausführungsform der Abgasreinigungsanordnung;
- Figuren 9 bis 12: perspektivische Ansichten weiterer Ausführungsformen der Abgasreinigungsanordnung; und
- Figur 13: ein Verfahren zur Herstellung einer Abgasreinigungsanordnung.

In Figur 2 ist ein Abgasreinigungssystem 11 schematisch dargestellt, wie es typischerweise zum Beispiel in Personenkraftwagen verwendet wird. Dieses Abgasreinigungssystem 11 dient zur Behandlung von Abgasen einer symbolisch dargestellten Verbrennungskraftmaschine 13, wobei das von der Verbrennungskraftmaschine 13 produzierte Abgas über einen Abgasstrang 15 an die Umgebung abgegeben wird, und wobei der Abgasstrang 15 eine Abgasreinigungsanordnung bzw. einen Partikelfilter 1 umfasst, welcher in einem von dem Abgas durchströmten Gehäuse 3 angeordnet ist. Für die in dieser Erfindung behandelten Partikelfilter sind insbesondere mit Dieselkraftstoff betriebene Verbrennungskraftmaschinen besonders geeignet.

In Strömungsrichtung des Abgases gesehen kann vor oder auch hinter dem Partikelfilter 1 ein Katalysator (hier nicht dargestellt), vorzugsweise ein Oxidationskatalysator, in demselben Gehäuse 3 zur Vor- bzw. Nachbehandlung des Abgases angeordnet sein. Durch den Katalysator werden bei Temperaturen oberhalb von 200 °C die Kohlenwasserstoffe sowie Kohlenmonoxid oxidiert. Aufgabe des Partikelfilters ist es dann, in dem Abgas verbleibende Abgaspartikel durch den Partikelfilter 1 zurückzuhalten.

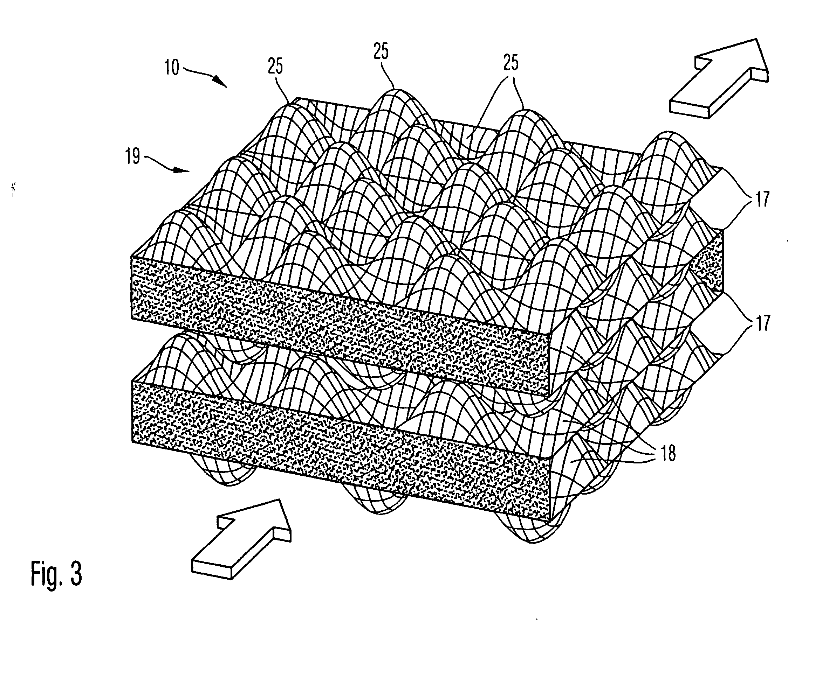

Figur 3 zeigt eine Detailansicht des Partikelfilters 10, welcher in dem Abgasstrang 15 in Figur 2 angeordnet ist. Dabei sind mehrere Materialschichten 17 aus einem für das Abgas permeablen porösen Werkstoff zu einem Materialschichtstapel 19 übereinander angeordnet, so daß jeweils zwei im Stapel benachbarte Materialschichten einen Abgasströmungsgang 18 bilden. Es ist in Figur 3 zu erkennen, daß die Abgasströmungsgänge 18 auf einer Eintrittsseite und auf einer Austrittsseite des Stapels 19 (Eintrittsseite und Austrittsseite bezogen auf die Abgasströmungsrichtung, siehe Pfeile) abwechselnd geschlossen (dunkler Balken) bzw. offen sind. Dadurch wird erreicht, daß das Abgas zu Durchtritten durch die Materialschichten 17 gezwungen wird, wodurch die Partikelfilterwirkung erzielt wird.

Der Materialschichtwerkstoff besteht hier aus einem gesinterten metallischen Vliesmaterial mit einem Faserdurchmesser von etwa 10 µm. Jedoch kann der Faserdurchmesser, die Porösität und die Dicke des Werkstoffs an die zu filternden Partikel angepasst werden. Es muss beachtet werden, daß größere Faserdurchmesser auch größere Abstände zwischen den Fasern bedingen und damit den Abscheidegrad verschlechtern. Durch besonders feine Strukturen kann dabei die Filterung im oberflächennahen Bereich erzielt werden, während "offenere" Strukturen zu einer Filterung über eine größere Tiefe des Materials führen.

Es ist auch möglich, unterschiedliche Lagen von Fasermaterial mit unterschiedlicher Fasergröße aufeinander anzuordnen. Wenn zum Beispiel in Filtrationsrichtung zuerst eine gröbere Struktur und dahinter eine feinere Struktur angeordnet, so kann in der gröberen Struktur eine Tiefenfiltration erzielt werden, während die dahinter angeordnete feinere Struktur selbst feinste Partikel herausfiltert. Ein weiterer Vorteil einer zusätzlichen Lage aus Fasermaterial ist die Erhöhung der Stabilität der Materialschichten und damit des gesamten Partikelfilters. Es sind allerdings auch andere Werkstoffe für die Materialschichten denkbar, wie zum Beispiel Keramiken, Pulvermaterialien oder Schäume. Jedoch muss beachtet werden, daß die Werkstoffe für das Abgas permeabel sind.

Außerdem ist denkbar, daß die porösen Materialschichten zur Erzielung einer besonders effektiven Abgasreinigung mit einem Katalysatormaterial beschichtet sind. Dieses Katalysatormaterial kann ein oder mehrere Edelmetalle, Oxide unedler Metalle oder/und Mischoxide, als Kombination mehrerer Oxide, oder Kombinationen dieser drei Stoffgruppen umfassen. Das Katalysatormaterial hat die Aufgabe, die von der betriebenen Verbrennungskraftmaschine abgegebenen Schadstoffe HC und CO unter Verwendung eben dieses Katalysatormaterials in die unschädlichen Stoffe H₂O und CO₂ umzuwandeln. Zudem wird die Reaktion von NO zu NO₂ unterstützt, wobei NO₂ eine Oxidation von Kohlenstoff bzw. Ruß bereits bei niedrigen Temperaturen unterstützt. Für eine genaue Beschreibung dieses sogenannten CRT-Prinzips (CRT = Continuously Regenerating Trap, sich kontinuierlich regenerierender Filter) wird auf das Europäische Patent EP 0 835 684 A2 verwiesen.

Um den Materialschichtstapel 19 im Gehäuse 3 gegen ein Verschieben durch die Abgasströmung zu fixieren, kann der Stapel z.B. durch eine oder mehrere Drahtgestrick- bzw. Fasermatte, welche zwischen Stapel und Gehäuse "geklemmt" wird, umgeben werden. Auch sind seitlich in den Stapel ragende Stifte geeignet, eine Halterung des Stapels zu bewirken.

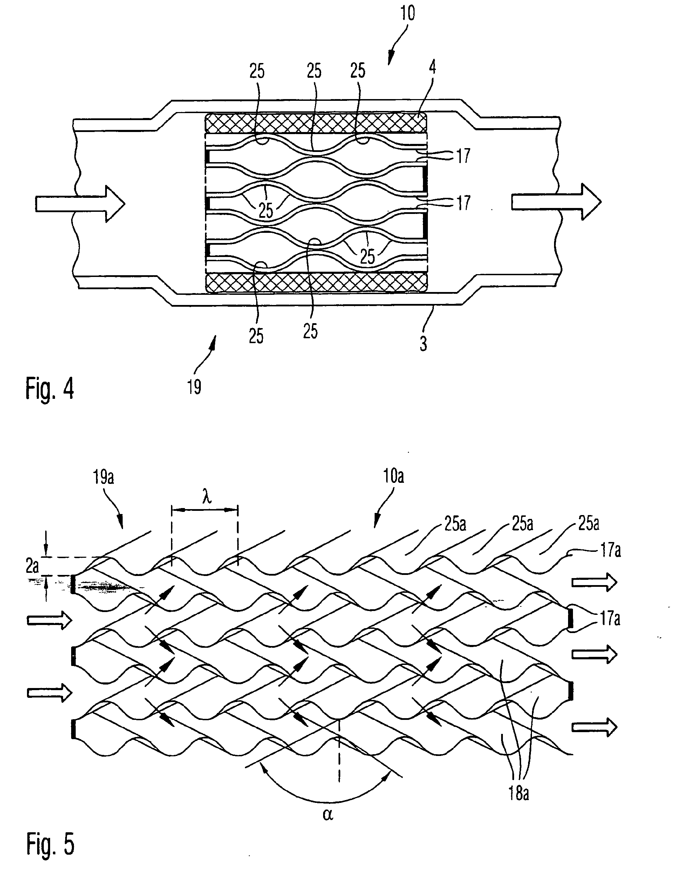

Figur 4 zeigt eine Querschnittsansicht des in Figur 2 bzw. Figur 3 dargestellten Partikelfilters 10. Der Partikelfilter 10 ist in dem Gehäuse 3 eingebaut dargestellt, wobei der Partikelfilter 10 mit einer Fasermatte 4 gegen Verrutschen fixiert und zum Schutz gegen Vibrationen umgeben ist.

Nachfolgend werden Varianten der anhand der Figur 3 erläuterten Ausführungsform beschrieben. Hierin sind Komponenten, die Komponenten der Figur 3 hinsichtlich ihres Aufbaus und ihrer Funktion entsprechen, mit den Bezugsziffern der Figur 3 versehen, denen zur Unterscheidung jedoch ein zusätzlicher Buchstabe hinzugefügt ist. Es wird auf die gesamte vorangehende Beschreibung Bezug genommen.

Figur 5 zeigt einen perspektivischen Längsschnitt eines Partikelfilters 10a, welcher eine zweite Ausführungsform der vorliegenden Erfindung ist.

In dieser Ausführungsform bilden die konkaven und konvexen Oberflächenbereiche 25a der Materialschichten 17a zusammenhängende Wellenberge und Wellentäler, welche sich in Materialschichtebenen im wesentlichen geradlinig erstrecken. Wellenberge und Wellentäler von unmittelbar benachbarten Materialschichten 17a bilden einen Winkel α zueinander, welcher im dargestellten Beispiel ca. 70° beträgt. Ein Abstand λ, das heißt eine Wellenlänge, zwischen zwei benachbarten Wellenbergen (bzw. Wellentälern) beträgt 2 mm, und eine maximale Auslenkung 2a der Wellenberge und - täler beträgt 1 mm. Durch geeignete Wahl eines Verhältnisses von λ zu a (relative Wellenlänge λ/a) kann eine besondere Steifigkeit der Partikelfilterstruktur erzielt werden.

In Figur 5 sind die Materialschichten 17a in einem Stapel 19a beabstandet voneinander dargestellt. Jedoch können die Materialschichten 17a aufeinander aufliegen, um so dem Partikelfilter 10a durch eine Vielzahl von Berührungspunkten zwischen Wellenbergen und -tälern benachbarter Materialschichten eine besondere Stabilität zu verleihen.

Wie in Figur 5 zu erkennen ist, sind durch benachbarte Materialschichten 17a gebildete Abgasströmungsgänge 18a wiederum abwechselnd auf ihrer Eintrittsseite geschlossen und auf ihrer Austrittsseite offen bzw. auf ihrer Eintrittsseite offen und auf ihrer Austrittsseite geschlossen, um den Abgas-Durchtritt durch die Materialschichten 17a zu erzwingen.

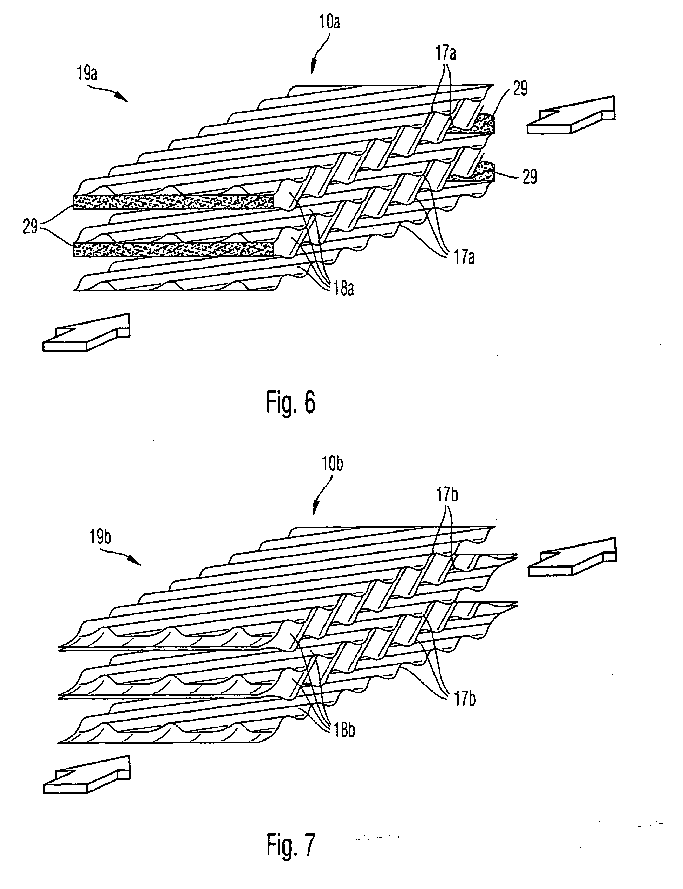

Figur 6 zeigt eine perspektivische Ansicht des in Figur 5 dargestellten Partikelfilters 10a. Dabei ist vor allem zu erkennen, daß benachbarte Materialschichten 17a abwechselnd auf der Eintrittsseite und auf der Austrittsseite durch einen quer zur Strömungsrichtung sich erstreckenden durchgehenden Steg 29 miteinander verbunden sind, so daß die Abgasströmungsgänge 18a abwechselnd auf der Eintrittsseite geschlossen und auf der Austrittsseite offen bzw. auf der Eintrittsseite offen und auf der Austrittsseite geschlossen sind. Die Stege 29 sind im dargestellten Beispiel aus Metall, können aber auch aus jedem anderen für das Abgas undurchdringlichem Material gebildet sein. Die Stege 29 sind im dargestellten Beispiel mit den Materialschichten 17a verschweißt.

Figur 7 zeigt eine perspektivische Ansicht eines Partikelfilters 10b welcher eine dritte Ausführungsform der vorliegenden Erfindung ist.

Bei dem in Figur 7 dargestellten Partikelfilter 10b sind die in Figur 6 dargestellten Stege 29 dadurch ersetzt, daß jeweils zwei benachbarte Materialschichten 17b eines Stapels 19b abwechselnd an der Eintrittsseite bzw. an der Austrittsseite miteinander durch Kleben oder Schweißen (z.B. Rollnahtschweißen) verbunden sind, wodurch Abgasströmungsgänge 18b wiederum abwechselnd auf der Eintrittsseite geschlossen und auf der Austrittsseite offen bzw. auf der Eintrittsseite offen und auf der Austrittsseite geschlossen sind.

Es ist auch denkbar, daß die Materialschichten 17b zusätzlich zum Kleben auch durch Falzen oder nur durch Falzen miteinander verbunden sind. Dabei wird ein Ende einer Materialschicht, welches mit einem Ende einer anderen Materialschicht zu verbinden ist, um das Ende der anderen Materialschicht herumgeschlagen, und dann mit dem anderen Ende verpresst.

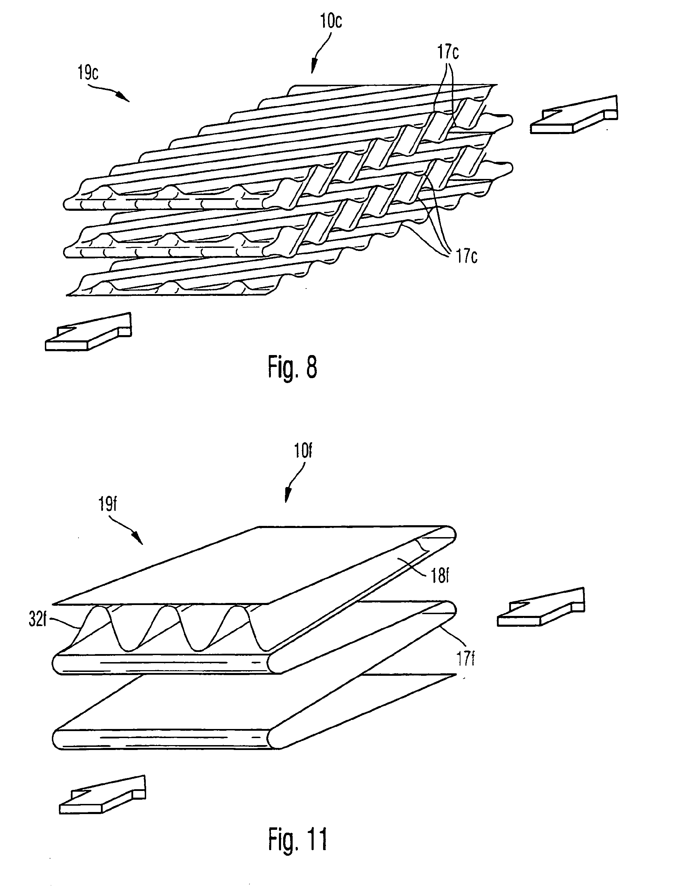

Figur 8 zeigt eine perspektivische Ansicht eines Partikelfilters 10c, welche eine vierte Ausführungsform der vorliegenden Erfindung ist.

Bei dem Partikelfilter 10c sind jeweils zwei benachbarte Materialschichten 17c eines Stapels 19c an der Eintrittsseite bzw. Austrittsseite integral miteinander verbunden, was durch Hin- und Herfalten eines Materialbandes erzielt worden ist.

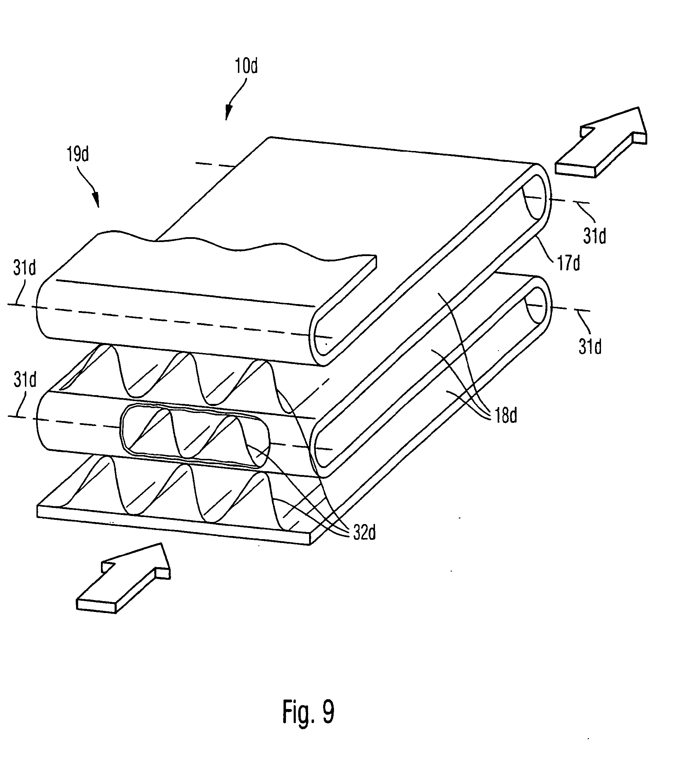

Figuren 9 bis 12 zeigen perspektivische Ansichten von Partikelfiltern 10d, 10e, 10f und 10g, welche nach einem erfindungsgemäßen Verfahren hergestellt worden sind.

Gemäß dem Verfahren wird ein Materialband 17d aus einem für das Abgas permeablen porösen Werkstoff an quer zu einer Erstreckungsrichtung des Materialbandes 17d sich erstreckenden gedachten Faltlinien 31 hin- und hergefaltet.

Sodann wird das derart gefaltete Materialband in Abschnitten übereinander gelegt, so daß ein Stapel 19d gebildet wird. Durch das Übereinanderlegen werden Abgasströmungsgänge 18d gebildet. Wie in den vorangehenden Ausführungsformen sind diese Abgasströmungsgänge 18d abwechselnd an der Eintrittsseite geschlossen und an der Austrittsseite offen bzw. an der Eintrittsseite offen und an Austrittsseite geschlossen.

Dann können, damit die Materialbandabschnitte einen definierten Abstand voneinander aufweisen, beim Legen zum Stapel Abstandshalter 32d zwischen einander benachbarten Abschnitten des Materialbandes angeordnet werden. In dem in Figur 9 dargestellten Beispiel bestehen diese Abstandshalter 32d jeweils aus einem gewellten Blech. Wellenberge und Wellentäler erstrecken sich in der Erstreckungsrichtung des Materialbandes. Die Abstandshalter 32d bilden gleichsam die Abgasströmungsgänge 18d für das zu reinigende Abgas und verleihen dem Stapel gleichzeitig Stabilität.

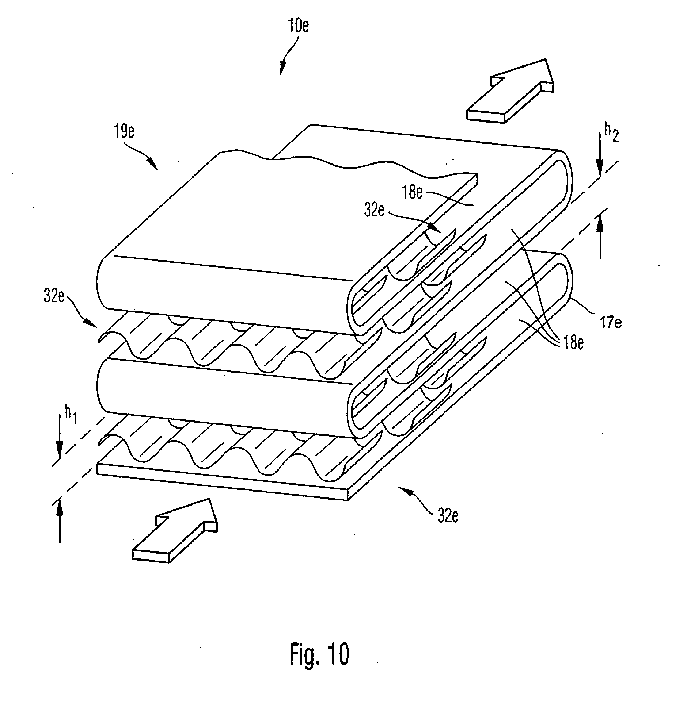

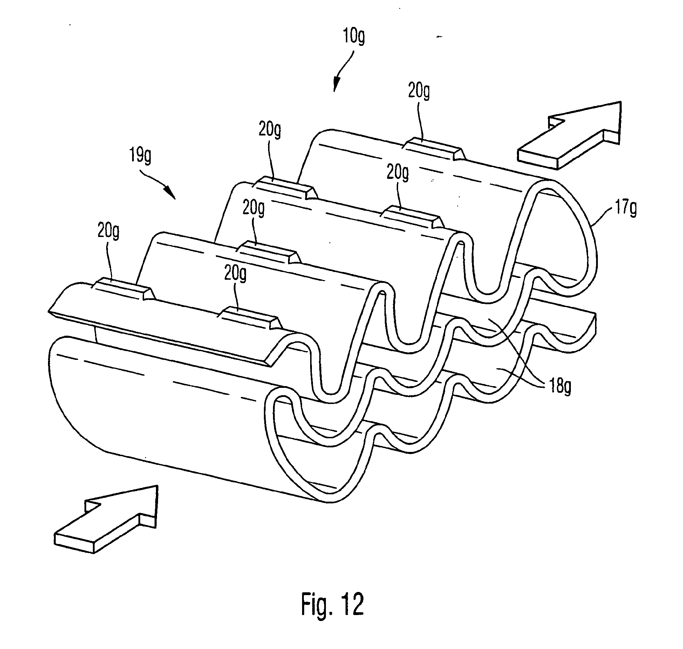

Andere Beispiele für Abstandshalter sind in den Figuren 10 und 11 dargestellt.

Figur 10 zeigt einen aus einem gefalteten Materialband 17e hergestellten Partikelfilter 10e mit in Abgasströmungsgängen 18e angeordneten Abstandshaltern 32e, welche jeweils aus Segmenten von seitlich versetzten gewellten Blechen bestehen, welche für eine "Verwirbelung" des Abgases sorgen.

Es ist außerdem in Figur 10 zu erkennen, daß auf der Eintrittsseite offene Abgasströmungsgänge 18e einen größeren Querschnitt bzw. Ganghöhe h₁, gesehen in Längsrichtung des Abgasströmungsgangs 18e, aufweisen als ein Querschnitt bzw. eine Ganghöhe h₂ eines auf der Austrittsseite offenen Abgasströmungsgangs 18e. Durch den größeren Querschnitt h₁ wird vermieden, daß die an der Eintrittsseite offenen Abgasströmungsgänge entlang ihrer Länge verblocken, wenn sich Rußpartikel aus dem Abgas in diesen Abgasströmungsgängen ablagern. Diese Rußpartikel könnten sich sonst bei zu klein dimensionierten an der Eintrittsseite offenen Abgasströmungsgängen ansammeln und den Abgasströmungsgang kontinuierlich der Länge nach verblocken.

Figur 11 zeigt einen Partikelfilter 10f mit einem beispielhaft in nur einem Abgasströmungsgang 18f dargestellten Abstandshalter 32f, welcher wiederum ein gewelltes Blech ist. Der Abstandshalter 32f ist hinsichtlich seines Längsquerschnitts an den Abgasströmungsgang 18f angepasst, das heißt der Abstandshalter 32f verjüngt sich in Richtung des Abgasströmungsganges 18f, und zwar von der Eintrittsseite bis zur Austrittsseite des Stapels 19f.

Außerdem ist in Figur 11 zu erkennen, daß sich, ebenso wie sich die an der Eintrittsseite offenen Abgasströmungsgänge 18f der Länge nach in ihrem Querschnitt verringern, die an der Austrittsseite offenen Abgasströmungsgänge der Länge nach in ihrem Querschnitt vergrößern. Dadurch wird, wie oben bereits erläutert worden ist, eine an allen Stellen der die Abgasströmungsgänge begrenzenden Materialschichten gleichmäßige Durchströmung der Materialschichten erreicht, was eine gleichmäßigere Nutzung der filternden Materialschichtoberfläche und eine gleichmäßigere Rußschichtdicke in den an ihrer Eintrittsseite offenen Abgasströmungsgängen zur Folge hat.

Figur 12 zeigt einen Partikelfilter 10g, welcher, ähnlich den in Figuren 10 bis 12 dargestellten Beispielen, aus einem Materialband 17g durch Hin- und Herfalten gebildet wurde. Der Abstand zwischen benachbarten Materialbandabschnitten wird durch in das Materialband 17g eingearbeitete Vorsprünge 20 konstant gehalten.

Die gesamte Abgasreinigungsanordnung 10g weist in sich in der Erstreckungsrichtung des Materialbandes eine Wellung auf. Dadurch sind auch die Abgasströmungsgänge 18g entsprechend gewellt. Die Filterwirkung der Abgasreinigungsanordnung 10g wird erhöht, da die filternde Oberfläche vergrößert ist.

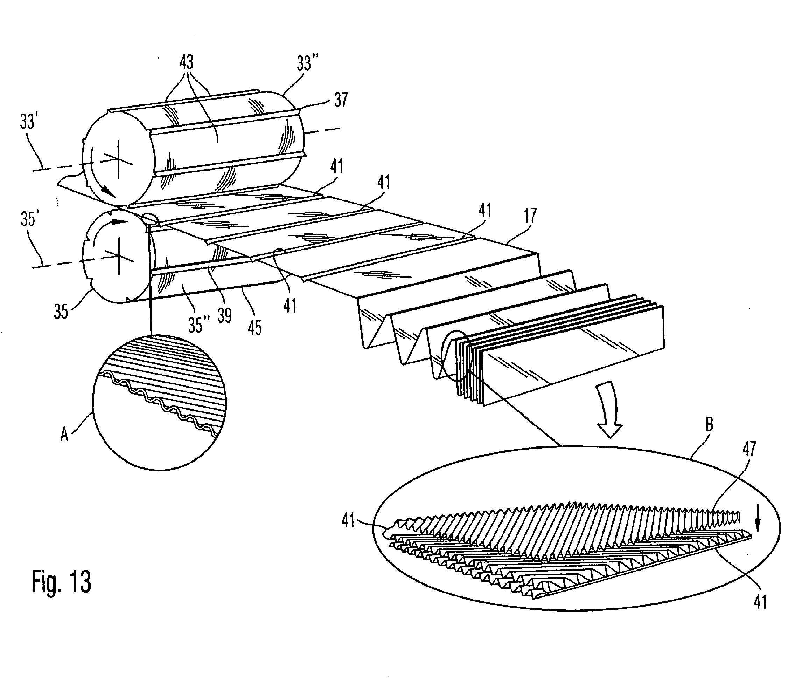

Figur 13 zeigt ein Verfahren zur Herstellung einer Abgasreinigungsanordnung zur Reinigung eines Abgases einer Verbrennungskraftmaschine.

In einem ersten Schritt wird ein Materialband 31 aus einem für das Abgas permeablen porösen Werkstoff durch zwei Prägewalzen 33,35 hindurchgeführt.

Die zwei Prägewalzen 33,35 sind jeweils um eine Achse 33',35' rotierbar, wobei die Achsen 33',35' parallel zueinander angeordnet sind.

Zum einen weist die Prägewalze 33 auf ihrer Mantelfläche 33" eine parallel zur Prägewalzenachse 33' angeordnete Längswulst 37 auf, und die Prägewalze 35 weist auf ihrer Mantelfläche 35" eine parallel zur Prägewalzenachse 35' angeordnete Längsausnehmung 39 auf. Bei Rotation der beiden Prägewalzen 33,35 in gegensinniger Richtung (angedeutet durch Pfeile auf den Stirnflächen der Walzen) mit dazwischen angeordnetem Materialband 31 drückt die Längswulst 37 das Materialband 31 an gedachten Faltlinien auf dem Materialband 31 (Faltlinien hier nicht dargestellt) in die Längsausnehmung 39, um so in dem Materialband 31 Deformationsbereiche 41 zu bilden, an welchen das Materialband 31 in einem zweiten Schritt hin- und hergefaltet wird, so daß ein Materialbandstapel gebildet wird.

Zum anderen weist die Prägewalze 33 auf ihrer Mantelfläche 33" in Umfangsrichtung der Prägewalze 33 benachbarte Wulste 43 auf (hier nur teilweise dargestellt), und die Prägewalze 35 weist auf ihrer Mantelfläche 35" in Umfangsrichtung der Prägewalze 35 benachbarte Ausnehmungen 45 auf (hier auch nur teilweise dargestellt), wobei sich die Wulste 43 und die Ausnehmungen 45 derartig spiralförmig um die Achsen 33',35' erstrecken, daß bei Rotation der beiden Prägewalzen 33,35 die Wulste 43 das Materialband 31 in die Ausnehmungen 45 drücken. Dadurch wird, wie in der Ausschnittvergrößerung A dargestellt ist, das Materialband 31 zu einem gewellten Materialband 31 geformt.

Wie oben bereits erwähnt, wird schließlich das derart geprägte Materialband 31 durch Hin- und Herfalten zu einem Materialbandstapel 47 geformt.

Eine Detailansicht des Materialbandstapels zeigt die Ausschnittvergrößerung B. Dabei ist zu beachten, daß der betrachtete Materialbandstapelabschnitt um 90° "gekippt" ist, so daß die betrachteten Materialbandabschnitte horizontal zum Liegen kommen. Dieser Materialbandstapel entspricht dem in Figur 9 dargestellten Stapel bzw. Abgasreinigungsanordnung 10c, auf deren Beschreibung hier verwiesen wird.

Als letzter Schritt wird der Materialbandstapel 47 in einem Gehäuse, wie z.B. dem in Figur 4 dargestellten Gehäuse 3, welches mit einer Abgas-Eintritts- und einer Abgas-Austrittsöffnung ausgebildet ist (dargestellt durch die Pfeile in Figur 4), derart angeordnet, daß die Deformationsbereiche 41 des Materialbandes zu der Eintrittsöffnung und zu der Austrittsöffnung hinweisend angeordnet sind. Außerdem wird der Materialbandstapel 47 gegenüber dem Gehäuse derart abgedichtet, daß das Abgas zu einem Durchtritt durch das Materialband gezwungen wird. Dies kann z.B. durch eine oder mehrere, wie in Figur 4 mit Bezugszeichen 4 dargestellte, geeignete Fasermatten erfolgen, welche den Materialbandstapel 47 so umgeben, daß das Abgas zu einer Durchströmung des Materialbandstapels 47 gezwungen ist.

## Patentansprüche

1. Abgasreinigungsanordnung zur Reinigung eines Abgases einer Verbrennungskraftmaschine, umfassend:
einen Stapel (19) aus mehreren in einer Stapelrichtung übereinander angeordneten Materialschichten (17) aus einem für das Abgas permeablen porösen Werkstoff und mit einer Eintrittsseite und einer Austrittsseite;
wobei zwischen jeweils zwei im Stapel (19) benachbarten Materialschichten wenigstens ein Abgasströmungsgang (18) in der Stapelrichtung begrenzt ist;
wobei Abgasströmungsgänge (18), die an der Eintrittsseite offen und an der Austrittsseite geschlossen sind, in Stapelrichtung abwechselnd mit Abgasströmungsgängen (18), die an der Eintrittsseite geschlossen und an der Austrittsseite offen sind, angeordnet sind;
wobei die Abgasströmungsgänge (18) durch Oberflächen der Materialschichten (17) begrenzt sind, welche, gesehen in einer Strömungsrichtung des Abgases von der Eintrittsseite zu der Austrittsseite, nacheinander eine Mehrzahl von konkaven und konvexen Bereichen (25) aufweisen;
**dadurch gekennzeichnet, daß**
durch die konkaven und konvexen Oberflächenbereiche (25) zusammenhängende Wellenberge und Wellentäler gebildet sind;
die Wellenberge und Wellentäler sich in einer Schichtebene im wesentlichen geradlinig erstrecken; und
die Wellenberge und die .Wellentäler der jeweils zwei im Stapel benachbarten Materialschichten (17) unter einem Winkel von mehr als 10° zueinander orientiert sind.

2. Abgasreinigungsanordnung nach Anspruch 1, wobei die den an seiner Austrittsseite bzw. an seiner Eintrittsseite geschlossenen Abgasströmungsgang (18) begrenzenden Materialschichten (17) an der Austrittsseite bzw. an der Eintrittsseite entlang einer Linie quer zur Strömungsrichtung aneinander anliegen und durch Verschweißen miteinander verbunden sind.

3. Abgasreinigungsanordnung nach Anspruch 1, wobei die den an seiner Austrittsseite bzw. an seiner Eintrittsseite geschlossenen Abgasströmungsgang (18) begrenzenden Materialschichten (17) an der Austrittsseite bzw. an der Eintrittsseite entlang einer Linie quer zur Strömungsrichtung aneinander anliegen und durch Kleben oder/und durch Falzen miteinander verbunden sind.

4. Abgasreinigungsanordnung nach Anspruch 1, wobei die den an seiner Austrittsseite bzw. an seiner Eintrittsseite geschlossenen Abgasströmungsgang (18) begrenzenden Materialschichten (17) an der Austrittsseite bzw. an der Eintrittsseite durch einen quer zur Strömungsrichtung sich erstreckenden durchgehenden Steg (29) miteinander verbunden sind.

5. Abgasreinigungsanordnung nach Anspruch 1, wobei die den an seiner Austrittsseite bzw. an seiner Eintrittsseite geschlossenen Abgasströmungsgang (18) begrenzenden Materialschichten (17) an der Austrittsseite bzw. an der Eintrittsseite integral miteinander verbunden sind.

6. Abgasreinigungsanordnung nach einem der Ansprüche 1 bis 5, wobei unmittelbar benachbarte Materialschichten (17) an einer Vielzahl von Berührungspunkten aufeinander aufliegen.

7. Abgasreinigungsanordnung nach einem der Ansprüche 1 bis 6, wobei zwischen jeweils zwei einander im Stapel (19) benachbarten Materialschichten (17) ein Abstandshalter (32) vorgesehen ist.

8. Abgasreinigungsanordnung nach Anspruch 7, wobei der Abstandshalter (32) ein gewelltes Flachmaterial ist.

9. Abgasreinigungsanordnung nach einem der Ansprüche 1 bis 8, wobei die an der Eintrittsseite offenen Abgasströmungsgänge (18e) einen größeren Querschnitt aufweisen als die an der Austrittsseite offenen Abgasströmungsgänge (18e).

10. Abgasreinigungsanordnung nach einem der Ansprüche 1 bis 9, wobei ein mittlerer Abstand zwischen jeweils zwei im Stapel benachbarten Materialschichten (17) einen Wert in einem Bereich von 0,5 mm bis 8,0 mm, insbesondere 1,0 mm bis 4,0 mm, und weiter bevorzugt von 1,5 bis 3,0 mm, aufweist.

11. Abgasreinigungsanordnung nach einem der Ansprüche 1 bis 10, wobei eine Auslenkung der konkaven bzw. konvexen Oberflächenbereiche (25) jeweils aus mittleren Materialschichtebenen größer als 1 mm ist.

12. Abgasreinigungsanordnung nach einem der Ansprüche 1 bis 11, wobei eine Auslenkung der konkaven bzw. konvexen Oberflächenbereiche (25) aus deren mittleren Materialschichtebenen kleiner als 7 mm, insbesondere kleiner als 5 mm und weiter bevorzugt kleiner als 3 mm ist.

13. Abgasreinigungsanordnung nach einem der Ansprüche 1 bis 12, wobei ein lateraler Abstand in Materialschichterstreckungsrichtung zwischen einander benachbarten konvexen Bereichen (25) größer als 2 mm, insbesondere größer als 3 mm ist.

14. Abgasreinigungsanordnung nach einem der Ansprüche 1 bis 13, wobei ein Abstand in Materialschichtrichtung zwischen einander benachbarten konvexen Bereichen kleiner als 7 mm, insbesondere kleiner als 5 mm ist.

15. Abgasreinigungsanordnung nach einem der Ansprüche 1 bis 14, wobei eine Dicke der Materialschichten (17) größer als 0,1 mm, insbesondere größer als 0,3 mm ist.

16. Abgasreinigungsanordnung nach einem der Ansprüche 1 bis 15, wobei eine Dicke der Materialschichten (17) kleiner als 2,0 mm, insbesondere kleiner als 1,2 mm ist.

17. Abgasreinigungsanordnung nach einem der Ansprüche 1 bis 16, wobei der für das Abgas permeable poröse Werkstoff als ein Gewebe oder/und ein Vlies oder/und ein Geflecht aus einem Fasermaterial gefertigt ist.

18. Abgasreinigungsanordnung nach Anspruch 17, wobei das Fasermaterial Metallfasern oder/und Keramikfasern umfaßt.

19. Abgasreinigungsanordnung nach einem der Ansprüche 1 bis 16, wobei der für das Abgas permeable poröse Werkstoff aus einem Pulvermaterial gefertigt ist.

20. Abgasreinigungsanordnung nach einem der Ansprüche 1 bis 16, wobei der für das Abgas permeable poröse Werkstoff aus einem Schaum gefertigt ist.

21. Abgasreinigungsanordnung nach einem der Ansprüche 1 bis 16, wobei der für das Abgas permeable poröse Werkstoff als Sinterkörper gefertigt ist.

22. Abgasreinigungsanordnung nach einem der Ansprüche 1 bis 21, wobei der für das Abgas permeable poröse Werkstoff ein Katalysatormaterial, insbesondere aus wenigstens einem Edelmetall oder/und wenigstens einem Metalloxid oder/und wenigstens einem Mischoxid, umfaßt, oder/und ein Sauerstoff-Speichermaterial umfaßt, welches insbesondere Cer oder/und ein Cer-Oxid umfaßt und mit diesem insbesondere beschichtet ist.

23. Abgasreinigungsanordnung nach einem der Ansprüche 1 bis 22, wobei der Stapel (19) an seiner Aussenseite in einem Bereich zwischen der Eintrittsseite und der Austrittsseite von wenigstens einer Matte aus dem Fasermaterial oder/und wenigstens einer Faservliesschicht begrenzt ist.

24. Abgasreinigungsanordnung nach Anspruch 23, wobei die wenigstens eine Fasermaterialmatte oder/und die wenigstens eine Faservliesschicht den Stapel (19) in dem Bereich zwischen der Eintrittsseite und der Austrittsseite vollständig umgibt.

25. Abgasreinigungsanordnung nach Anspruch 23 oder 24, wobei wenigstens einer der Abgasströmungsgänge (18) quer zur Stapelrichtung durch die Matte begrenzt ist.

## Claims

1. An exhaust gas cleaning arrangement for cleaning an exhaust gas of a combustion engine, the arrangement comprising:
a stack (19) of plural material layers (17) made of a porous material permeable to the exhaust gas and being superposed on each other in a stacking direction, said stack having an entry side and an exit side,
wherein at least one exhaust gas flow channel (18) is confined in the stacking direction between two adjacent material layers (19) in the stack;
wherein exhaust gas flow channels (18) which are open at the entry side and closed at the exit side are alternately arranged in the stacking direction with exhaust gas flow channels (18) which are closed at the entry side and open at the exit side;
wherein the exhaust gas flow channels (18) are confined by surfaces of the material layers (17) which, when viewed in a flow direction of the exhaust gas from the entry side to the exit side, are successively formed with a plurality of concave and convex areas (25);
**characterized in that**
contiguous wave crests and continuous wave troughs are formed by the concave and convex surface areas (25);
the wave crests and wave troughs extend substantially linearly in a plane of the material layer;
the wave crests and the wave troughs of respective two adjacent material layers (17) in the stack are oriented relative to each other at an angle of more than 10°.

2. The exhaust gas cleaning arrangement according to claim 1, wherein the material layers (17) confining the exhaust gas flow channel (18) closed at its exit side or entry side, respectively, contact each other at the exit side or entry side, respectively, along a line oriented transversely to the flow direction and are joined to each other by welding.

3. The exhaust gas cleaning arrangement according to claim 1, wherein the material layers (17) confining the exhaust gas flow channel (18) closed at its exit side or entry side, respectively, contact each other at the exit side or entry side, respectively, along a line oriented transversely to the flow direction and are joined to each other by adhering or/and by folding.

4. The exhaust gas cleaning arrangement according to claim 1, wherein the material layers (17) confining the exhaust gas flow channel (18) closed at its exit side or entry side, respectively, are joined to each other at the exit side or entry side, respectively, by means of a continuous web (29) extending transversely to the flow direction.

5. The exhaust gas cleaning arrangement according to claim 1, wherein the material layers (17) confining the exhaust gas flow channel (18) closed at its exit side or entry side, respectively, are integrally joined to each other at the exit side or entry side, respectively.

6. The exhaust gas cleaning arrangement according to one of claims 1 to 5, wherein directly adjacent material layers (17) contact each other at a plurality of contact points.

7. The exhaust gas cleaning arrangement according to one of claim 1 to 6, wherein a spacer (32) is arranged between respective two adjacent material layers (17) in the stack (19).

8. The exhaust gas cleaning arrangement according to claim 7, wherein the spacer (32) is a corrugated flat material.

9. The exhaust gas cleaning arrangement according to one of claims 1 to 8, wherein the exhaust gas flow channels (18e) which are open at the entry side have a larger cross section than the exhaust gas flow channels (18e) which are open at the exit side.

10. The exhaust gas cleaning arrangement according to one of claims 1 to 9, wherein an average distance between respective two adjacent material layers (17) in the stack is in a range from 0.5 mm to about 8.0 mm, particularly in a range from 1.0 mm to 4.00, preferably in a range from 1.5 mm to 3.0 mm.

11. The exhaust gas cleaning arrangement according to one of claims 1 to 10, wherein a bulge of the concave surface areas (25) and the convex surface areas (25), respectively, from average material layer planes is more than 1 mm.

12. The exhaust gas cleaning arrangement according to one of claims 1 to 11, wherein a bulge of the concave surface areas (25) and the convex surface areas (25), respectively, from the average material layer planes thereof is less than 7 mm, particularly less than 5 mm and preferably less than 3 mm.

13. The exhaust gas cleaning arrangement according to one of claims 1 to 12, wherein a lateral distance in material layer extension direction between adjacent convex areas (25) is more than 2 mm, particularly more than 3 mm.

14. The exhaust gas cleaning arrangement according to one of claims 1 to 13, wherein a distance in material layer extension direction between adjacent convex areas is less than 7 mm, particularly less than 5 mm.

15. The exhaust gas cleaning arrangement according to one of claims 1 to 14, wherein a thickness of the material layers (17) is more than 0.1 mm, particularly more than 0.3 mm.

16. The exhaust gas cleaning arrangement according to one of claims 1 to 15, wherein a thickness of the material layers (17) is less than 2 mm, particularly less than 1.2 mm.

17. The exhaust gas cleaning arrangement according to one of claims 1 to 16, wherein the porous material permeable to exhaust gas is a fabric or/and a nonwoven or/and a braiding of a fiber material.

18. The exhaust gas cleaning arrangement according to claim 17, wherein the fiber material comprises metal fibers or/and ceramic fibers.

19. The exhaust gas cleaning arrangement according to one of claims 1 to 16, wherein the porous material permeable to the exhaust gas is made of a powder material.

20. The exhaust gas cleaning arrangement according to one of claims 1 to 16, wherein the porous material permeable to the exhaust gas is made of a foam.

21. The exhaust gas cleaning arrangement according to one of claims 1 to 16, wherein the porous material permeable to the exhaust gas is made as a sintered body.

22. The exhaust gas cleaning arrangement according to one of claims 1 to 16, wherein the porous material permeable to the exhaust gas comprises a catalytic material, particularly of at least one noble metal or/and at least one metal oxide or/and at least one compound oxide, or/and comprises an oxygen storing material comprising in particular cerium and/or a cerium oxide and is in particular coated therewith.

23. The exhaust gas cleaning arrangement according to one of claims 1 to 22, wherein the stack (19) is confined at its outside in an area between the entry side and the exit side by at least one mat of the fiber material or/and at least one fibrous nonwoven layer.

24. The exhaust gas cleaning arrangement according to claim 23, wherein the at least one fiber material mat or/and the at least one fibrous nonwoven layer completely surrounds the stack (19) in the area between the entry side and the exit side.

25. The exhaust gas cleaning arrangement according to claim 23 or 24, wherein at least one of the exhaust gas flow channels (18) is confined by the mat transversely to the stacking direction.

## Revendications

1. Dispositif de purification des gaz d'échappement destiné à purifier un gaz d'échappement d'une machine à combustion interne, comprenant :
un empilement (19) constitué de plusieurs couches de matériau (17) agencées les unes sur les autres dans un sens d'empilement, lesquelles couches sont réalisées en une matière poreuse perméable pour les gaz d'échappement et présentent un côté entrée et un côté sortie ;
dans lequel au moins un passage d'écoulement des gaz d'échappement (18) est limité dans le sens d'empilement entre deux couches de matériau voisines dans l'empilement (19) ;
dans lequel les passages d'écoulement des gaz d'échappement (18), qui sont ouverts côté entrée et fermés côté sortie, sont agencés en s'alternant dans le sens d'empilement avec des passages d'écoulement des gaz d'échappement (18), qui sont fermés côté entrée et ouverts côté sortie ;
dans lequel les passages d'écoulement des gaz d'échappement (18) sont limités par les surfaces des couches de matériau (17), lesquelles, vues dans un sens d'écoulement des gaz d'échappement du côté entrée vers le côté sortie, présentent une pluralité de zones concaves et convexes (25) l'une à la suite de l'autre ;
**caractérisé en ce que**
des sommets et des creux liés sont formés par les zones de surfaces concaves et convexes (25);
les sommets et les creux s'étendent de manière essentiellement rectiligne dans un plan de couche ; et
les sommets et les creux de chacune des deux couches de matériau (17) voisines dans l'empilement sont orientés les uns par rapport aux autres suivant un angle supérieur à 10°.

2. Dispositif de purification des gaz d'échappement selon la revendication 1, dans lequel les couches de matériau (17) limitant le passage d'écoulement des gaz d'échappement (18) fermé côté sortie et/ou entrée se situent les unes à côté des autres au niveau du côté sortie et/ou entrée suivant une ligne transversale au sens de l'écoulement et sont reliées les unes aux autres par soudage.

3. Dispositif de purification des gaz d'échappement selon la revendication 1, dans lequel les couches de matériau (17) limitant le passage d'écoulement des gaz d'échappement (18) fermé côté sortie et/ou entrée se situent les unes à côté des autres au niveau du côté sortie et/ou entrée suivant une ligne transversale au sens de l'écoulement et sont reliées les unes aux autres par collage et/ou par pliage.

4. Dispositif de purification des gaz d'échappement selon la revendication 1, dans lequel les couches de matériau (17) limitant le passage d'écoulement des gaz d'échappement (18) fermé côté sortie et/ou entrée sont reliées les unes aux autres au côté sortie et/ou entrée par une traverse (29) continue s'étendant de manière transversale au sens de l'écoulement.

5. Dispositif de purification des gaz d'échappement selon la revendication 1, dans lequel les couches de matériau (17) limitant le passage d'écoulement des gaz d'échappement (18) fermé côté sortie et/ou entrée sont reliées les unes aux autres de manière intégrale au côté sortie et/ou entrée.

6. Dispositif de purification des gaz d'échappement selon l'une quelconque des revendications 1 à 5, dans lequel les couches de matériau (17) directement voisines s'appuient les unes sur les autres en une pluralité de points de contact.

7. Dispositif de purification des gaz d'échappement selon l'une quelconque des revendications 1 à 6, dans lequel un écarteur (32) est prévu entre chacune des deux couches de matériau (17) voisines dans l'empilement (19).

8. Dispositif de purification des gaz d'échappement selon la revendication 7, dans lequel l'écarteur (32) est un matériau plat ondulé.

9. Dispositif de purification des gaz d'échappement selon l'une quelconque des revendications 1 à 8, dans lequel les passages d'écoulement des gaz d'échappement (18e) ouverts côté entrée présentent une section supérieure aux passages d'écoulement des gaz d'échappement (18e) ouverts côté sortie.

10. Dispositif de purification des gaz d'échappement selon l'une quelconque des revendications 1 à 9, dans lequel une distance moyenne entre chacune des deux couches de matériau (17) voisines dans l'empilement présente une valeur comprise entre 0,5 mm et 8,0 mm, en particulier 1,0 et 4,0 mm et de préférence de 1,5 et 3,0 mm.

11. Dispositif de purification des gaz d'échappement selon l'une quelconque des revendications 1 à 10, dans lequel une déviation des zones de surface concaves et convexes (25) est respectivement supérieure à 1 mm à partir des plans médians de couche de matériau.

12. Dispositif de purification des gaz d'échappement selon l'une quelconque des revendications 1 à 11, dans lequel une déviation des zones de surface concaves et convexes (25) est inférieure à 7 mm à partir de leur plan médian de couche de matériau, en particulier inférieure à 5 mm et de préférence inférieure à 3 mm.

13. Dispositif de purification des gaz d'échappement selon l'une quelconque des revendications 1 à 12, dans lequel une distance latérale dans le sens de prolongement des couches de matériau entre des zones convexes voisines (25) les unes des autres est supérieure à 2 mm, en particulier supérieure à 3 mm.

14. Dispositif de purification des gaz d'échappement selon l'une quelconque des revendications 1 à 13, dans lequel une distance dans le sens de prolongement des couches de matériau entre des zones convexes voisines les unes des autres est inférieure à 7 mm, en particulier inférieure à 5 mm.

15. Dispositif de purification des gaz d'échappement selon l'une quelconque des revendications 1 à 14, dans lequel une épaisseur des couches de matériau (17) est supérieure à 0,1 mm, en particulier supérieure à 0,3 mm.

16. Dispositif de purification des gaz d'échappement selon l'une quelconque des revendications 1 à 15, dans lequel une épaisseur des couches de matériau (17) est inférieure à 2,0 mm, en particulier inférieure à 1,2 mm.

17. Dispositif de purification des gaz d'échappement selon l'une quelconque des revendications 1 à 16, dans lequel la matière poreuse perméable pour les gaz d'échappement est réalisée comme un tissu et/ou un matelas de fibres ou/et un tissage en fibres.

18. Dispositif de purification des gaz d'échappement selon la revendication 17, dans lequel le matériau de fibres comporte des fibres métalliques et/ou des fibres céramiques.

19. Dispositif de purification des gaz d'échappement selon l'une quelconque des revendications 1 à 16, dans lequel la matière poreuse perméable pour le gaz d'échappement est réalisée en une poudre.

20. Dispositif de purification des gaz d'échappement selon l'une quelconque des revendications 1 à 16, dans lequel la matière poreuse perméable pour les gaz d'échappement est réalisée en mousse.

21. Dispositif de purification des gaz d'échappement selon l'une quelconque des revendications 1 à 16, dans lequel la matière poreuse perméable pour les gaz d'échappement est réalisée sous forme de corps frittés.

22. Dispositif de purification des gaz d'échappement selon l'une quelconque des revendications 1 à 21, dans lequel la matière poreuse perméable pour les gaz d'échappement comporte un matériau catalyseur, en particulier en au moins un métal précieux et/ou au moins un oxyde métallique et/ou au moins un oxyde mixte, et/ou comprend un matériau d'accumulation d'oxygène, lequel comprend en particulier du cérium et/ou un oxyde de cérium et est recouvert avec celui-ci en particulier.

23. Dispositif de purification des gaz d'échappement selon l'une quelconque des revendications 1 à 22, dans lequel l'empilement (19) est limité au niveau de son côté extérieur dans une zone entre le côté entrée et le côté sortie par au moins une natte en fibres et/ou au moins une couche de fibres non tissées.

24. Dispositif de purification des gaz d'échappement selon la revendication 23, dans lequel au moins une natte en fibres et/ou la au moins une couche de fibres non tissées, entoure complètement l'empilement (19) dans la zone entre le côté entrée et le côté sortie.

25. Dispositif de purification des gaz d'échappement selon la revendication 23 ou 24, dans lequel au moins un des passages d'écoulement des gaz d'échappement (18) est limité de manière transversale au sens d'empilement par la natte.
